# EUROPÄISCHE PATENTSCHRIFT

(11) **EP 2 788 692 B1**
(45) Veröffentlichungstag und Bekanntmachung des Hinweises auf die Patenterteilung: **23.03.2022**
(21) Anmeldenummer: 12809112.1
(22) Anmeldetag: 06.12.2012
(51) Int. Cl.: F24H 1/10, F16L 53/00, F01N 3/20, H05B 3/58, F24H 1/00, F24H 1/14, F16L 53/38

(54) **KONFEKTIONIERTE BEHEIZBARE MEDIENLEITUNG MIT EINER MEDIENLEITUNG MIT ZUMINDEST ZWEI AUF DEREN AUSSENSEITE ANGEORDNETEN HEIZELEMENTEN UND VERFAHREN ZU IHRER HERSTELLUNG**
ASSEMBLED HEATABLE MEDIA LINE COMPRISING A MEDIA LINE HAVING AT LEAST TWO HEATING ELEMENTS ARRANGED ON THE EXTERIOR THEREOF, AND METHOD FOR THE PRODUCTION THEREOF
CONDUITE À FLUIDE CONFECTIONNÉE, SOUS FORME D'UNE CONDUITE À FLUIDE COMPORTANT AU MOINS DEUX ÉLÉMENTS DE CHAUFFE PLACÉS SUR SA FACE EXTERNE, ET PROCÉDÉ DE PRODUCTION DE LADITE CONDUITE

(30) Priorität: 07.12.2011 DE 102011120357
(43) Veröffentlichungstag der Anmeldung: 15.10.2014
(73) Patentinhaber: Voss Automotive GmbH, 51688 Wipperfürth (DE)
(72) Erfinder: ETSCHEID, Tobias, 51789 Lindlar (DE); SCHWARZKOPF, Otfried, 51515 Kürten (DE); ISENBURG, Marco, 40885 Ratingen (DE)
(74) Vertreter: Rebbereh, Cornelia
(86) Internationale Anmeldenummer: PCT/EP2012/005028
(87) Internationale Veröffentlichungsnummer: WO 2013/083273

(56) Entgegenhaltungen:
- EP-A1- 1 985 908
- WO-A1-2009/080501
- DE-A1-102008 059 751
- DE-U1-202008 003 908
- DE-U1-202009 003 807
- US-A- 4 553 023
- US-A1- 2010 253 067
- US-A1- 2010 290 764
- US-A1- 2011 073 585

## Beschreibung

Die Erfindung betrifft ein Verfahren zum Herstellen einer beheizbaren Medienleitung, umfassend die Medienleitung, zumindest einen Leitungsverbinder und zumindest zwei Heizelemente sowie eine konfektionierte beheizbare Medienleitung mit einer Medienleitung mit zumindest zwei auf deren Außenseite angeordneten Heizelementen und mit zumindest einem Leitungsverbinder. Derartige beheizbare Medienleitungen und Verfahren zu deren Herstellung sind im Stand der Technik bekannt. Insbesondere in Fahrzeugen sind eine Reihe von Medienleitungen vorgesehen zum Leiten von zumeist flüssigen Medien. Diese Medienleitungen drohen bei niedrigen Temperaturen einzufrieren, weswegen eine Beheizung vorgesehen wird. Leitungsverbinder dienen zum Verbinden von zumindest zwei Medienleitungen oder zur Anschlussverbindung einer Medienleitung mit einem beliebigen Aggregat. Durch die Medienleitungen werden oftmals solche Medien geführt, die aufgrund eines relativ hohen Gefrierpunktes bereits bei noch recht hohen Umgebungstemperaturen zum Gefrieren neigen, wodurch die Funktionsfähigkeit beispielsweise eines Fahrzeugs beeinträchtigt oder sogar erheblich gestört werden kann. Ersichtlich ist dies insbesondere bei Wasserleitungen für Scheibenwaschanlagen der Fall, ebenso wie bei Medienleitungen, die von einer wässrigen Harnstofflösung als Medium durchströmt werden, die als NOₓ-Reaktionsadditiv für Dieselmotoren mit sogenannten SCR-Katalysatoren eingesetzt wird.

Aus der EP 1 985 908 A1 ist ein Leitungsverbinder für Medienleitungen bekannt, der aus einem Verbinderstück mit Anschlussabschnitt zur Anschlussverbindung mit der Medienleitung oder einem Aggregat und mit einem an den Anschlussabschnitt angrenzenden Übergangsabschnitt mit einem Strömungskanal besteht. Zumindest im Bereich des Übergangsabschnitts sind elektrische Heizmittel in einer den Strömungskanal zumindest teilweise umschließenden Anordnung vorgesehen. Die somit im Übergangsabschnitt, also außerhalb des Anschlussabschnitts angeordneten elektrischen Heizmittel dienen dazu, ein Einfrieren des jeweiligen Mediums innerhalb des Verbindungsstücks zu vermeiden oder durch Auftauen des eingefrorenen Mediums aufzuheben. Der Heizdraht umgibt das Verbinderstück außenseitig spulenartig gewickelt, wobei im Innenbereich zumindest eine weitere Spulenwicklung im Bereich des Strömungskanals angeordnet wird, so dass durch Fließen eines Stroms durch den äußeren Heizdraht eine Induktion in der inneren Spulenwicklung zum Erzeugen von Wärme vorgesehen ist. Die Medienleitung besteht aus einer inneren Rohrleitung mit einem am Umfang angeordneten Heizleiter, wobei Rohrleitung und Heizleiter von einer äußeren Umhüllung umschlossen werden, wie durch ein Wellrohr. An den beiden Enden der Medienleitung werden Leitungsverbinder angeschlossen. Der auf der Rohrleitung angeordnete Heizleiter wird vor dem Auffügen des Wellrohres mit einem Klebeband umwickelt und hierdurch an der Rohrleitung fixiert. Alternativ wird vorgeschlagen, eine Lack- oder Kleberschicht zur Fixierung vorzusehen. Die Heizdrähte der Leitungsverbinder und die Heizleitung der Rohrleitung sind miteinander elektrisch verschaltet, wobei jeweils der Heizdraht eines der Leitungsverbinder mit einem der Wicklungsdrähte der die Rohrleitung umgebenden Heizleitung elektrisch in Reihe geschaltet und die Anschlussenden der beiden Reihenschaltungen an den beiden Leitungsverbindern nach außen geführt werden, wo ein Anschluss an eine Spannungsversorgung bzw. eine Weiterverbindung vorgesehen ist. Alternativ ist offenbart, dass die Heizdrähte der Leitungsverbinder und der die Rohrleitung umgebenden Wicklungen als elektrische Reihenschaltung aller Heizdrähte vorgesehen sind mit nur einem äußeren Leitungsanschluss.

Aus der US 2010/0290764 A1 ist ein Leitungsverbinder für Medienleitungen bekannt, der aus einem Verbinderstück mit zumindest einem Anschlussabschnitt zum Anschlussverbinden mit einer Medienleitung oder mit einem Aggregat und mit einem an den Anschlussabschnitt angrenzenden Übergangsabschnitt mit einem Strömungskanal besteht, Dabei sind zumindest im Bereich des Übergangsabschnitts elektrische Heizmittel in einer den Strömungskanal zumindest teilweise umschließenden Anordnung vorgesehen. Eine konfektionierte Medienleitung besteht aus einer inneren Rohrleitung mit einem am Umfang angeordneten Heizleiter. Die Rohrleitung mit dem Heizleiter ist von einer äußeren Umhüllung umschlossen. An den beiden Enden der Medienleitung sind jeweils Leitungsverbinder angeordnet. Die Umhüllung der Medienleitung ist in das Außengehäuse des Leitungsverbinders hineingeführt und mit dem Außengehäuse formschlüssig verbunden. Der die Rohrleitung umgebende Heizleiter ist um diese spiralförmig gewickelt und aus zwei parallel verlaufenden Drahtwicklungen gebildet. Jeweils der Heizdraht eines der Leitungsverbinder ist mit einem der Wicklungsdrähte der Drahtwicklungen elektrisch in Reihe geschaltet und die Anschlussenden dieser beiden Reihenschaltungen an beiden Leitungsverbindern sind nach außen geführt, wo ein Anschluss einer Spannungsversorgung und/oder eine Weiterverbindung erfolgen kann.

Bei Führen mehrerer Heizelemente entlang einer Medienleitung und mit dieser verbundener endseitiger Leitungsverbinder kann es vorkommen, dass eine übermäßig große Heizleistung insbesondere an den Leitungsverbindern erzeugt wird. Heizleiter werden üblicherweise im Hinblick auf die Litzenauswahl und Steigung etc. auf die betreffende Medienleitung und deren Leistungsbedarf angepasst. Ist die Litze bzw. sind die Litzen oder Heizelemente auf der Medienleitung und dem Leitungsverbinder identisch, ergibt sich die Leistungseinkopplung am Leitungsverbinder in Abhängigkeit von der Leitungslänge im besonderen Maße. Hierbei tritt insbesondere bei kurzen Leitungen das Problem auf, dass bei diesen häufig zu viel Leistung eingekoppelt wird, oder auch, wenn Heizwendel verwendet werden. Ein Leitungsverbinder bietet für die Befestigung der Heizleiter nur wenig Variationsmöglichkeiten, da ein Umschlingen und eine Befestigung aus Kostengründen üblicherweise relativ gleichbleibend erfolgen, also die Verteilung der Heizleiter auf dem Leitungsverbinder, die Anzahl der Umschlingungen, die mindestens ein oder zwei beträgt, die Positionierung einer Crimpverbindung, die in einem den Leitungsverbinder umgebenden Gehäuse angeordnet wird. Auch eine mögliche Befestigungsstruktur, z.B. eine Rippenstruktur, auf der Außenseite des Leitungsverbinders zum Befestigen der Heizleiter ist üblicherweise bei den meisten Leitungsverbindern gleich ausgebildet. Für kurze bzw. sehr kurze Leitungen von insbesondere unter einem Meter kann das Vorsehen einer Heizwendel sinnvoll sein. Wünschenswert wäre es daher, eine Maßnahme vorzusehen, die ein Beaufschlagen insbesondere der endseitigen Leitungsverbinder einer beheizbaren Medienleitung mit einer geringeren Heizleistung ermöglicht.

Der vorliegenden Erfindung liegt daher die Aufgabe zugrunde, Verfahren zum Herstellen einer beheizbaren Medienleitung und eine konfektionierte beheizbare Medienleitung zu schaffen, bei dem es möglich ist, eine optimale Heizleistung bezüglich des durch die beheizbare Medienleitung mit endseitigen Leitungsverbindern hindurchgeführten Mediums, insbesondere im Bereich des zumindest einen endseitigen Leitungsverbinders zu erzielen.

Die Aufgabe wird für ein Verfahren zum Herstellen einer Medienleitung, umfassend eine Medienleitung, zumindest einen Leitungsverbinder und zumindest zwei Heizelemente durch die Merkmale des Anspruchs 1 gelöst.

Die Aufgabe wird auch für die konfektionierte beheizbare Medienleitung durch die Merkmale des Anspruchs 4 gelöst.

Weiterbildungen der Erfindung sind in den abhängigen Ansprüchen definiert.

Dadurch wird eine konfektionierte beheizbare Medienleitung geschaffen, bei der nur eines der zumindest zwei Heizelemente zum Beheizen eines Leitungsverbinders bzw. des dort hindurch geführten Mediums verwendet wird. Hierdurch kann eine geringere Heizleistung bzw. Wärmezufuhr in den Leitungsverbinder hinein vorgesehen werden. Bei dem sonst üblichen Umwickeln der Leitungsverbinder mit den sich entlang der Medienleitung erstreckenden zumindest zwei Heizelementen kann es vorkommen, dass eine zu große Wärmemenge in den Leitungsverbinder eingebracht wird. Dies kann durch das Umwickeln des zumindest einen Leitungsverbinders nur mit einem Heizelement vermieden werden. Zwar werden zumindest zwei Heizelemente entlang der Medienleitung angeordnet, jedoch nur eines von diesen an oder auf dem zumindest einen endseitigen Leitungsverbinder. Bei Kürzen des einen Heizelements ist ein Freiheitsgrad mehr bei der Konfiguration der beheizbaren Medienleitung möglich, da die in den Leitungsverbinder eingebrachte Heizleistung durch das Anordnen des nur einen Heizelements auf diesem neben den anderen Variationsmöglichkeiten der Auswahl des Widerstandes der Heizelemente und von deren Länge variiert werden kann. Die Heizelemente könnten unterschiedliche Widerstände aufweisen, so dass hierüber eine Variation der Heizleistung auch an den Leitungsverbindern möglich ist, da dort jeweils das Heizelement zum Anordnen auf dem Leitungsverbinder verwendet werden kann, das die gewünschte Heizleistung erbringt. Die Auswahl der Heizelemente kann anwendungsspezifisch somit auch bezüglich deren Widerstand erfolgen.

Die Medienleitung kann schlauchartig, insbesondere aus einem Elastomer oder Compoundmaterial, z.B. als EPDM-Schlauchleitung (Ethylen-Propylen-Dien-Monomer), und/oder rohrförmig ausgebildet sein, insbesondere als Polyamid-Rohrleitung, z.B. aus Polyamid 12. Unter Heizelementen werden vorliegend die unterschiedlichsten Mittel zum Einbringen von Wärme, also zum Beheizen der Medienleitung und der endseitigen Leitungsverbinder verstanden. Unter Heizelementen werden insbesondere Heizleiter, Heizlitzen und Heizdrähte verstanden, wobei unter Heizleitern wärmeleitende Elemente, die einen Wärmeübergang in eine Schicht bewirken, verstanden werden. Sie umfassen Heizwendel, die ihrerseits eine Innenfaser und um diese herum gewendelte Drähte umfassen. Unter Heizlitzen sollen hier sowohl einzelne Heizdrähte als auch eine Anzahl von zusammengefassten Heizdrähten verstanden werden, wobei der jeweilige Heizdraht bzw. die Anzahl von zusammengefassten Heizdrähten mit oder ohne Isolierummantelung vorgesehen sein können.

Das Heizelement kann ferner zumindest eine Heizwendel mit zumindest zwei Heizdrahtadersträngen umfassen. Heizelemente in Form von Heizwendeln bieten sich besonders für kurze konfektionierte Leitungen an mit einer Länge von unter 2 m. Heizwendel werden durch Vorsehen einer Innenfaser oder Seele gebildet, die von zumindest einen Draht umwickelt ist, insbesondere zwei Heizdrahtadersträngen. Bei Reihenschaltung der unterschiedlichen Heizelemente zum Beheizen der Medienleitung und der Leitungsverbinder beeinflusst eine Leitungslänge von unter 2 m die Heizleistungseinkopplung in den Leitungsverbinder. Die Heizleistung an dem Leitungsverbinder ist nicht variabel, jedoch variiert die Medienleitungslänge stark. Deshalb kann es bei kurzen Medienleitungen sinnvoll sein, die Heizdrahtlänge in der Medienleitung zu erhöhen, beispielsweise durch Anordnen in Form einer Wendel. Anstelle des Vorsehens nur einer Heizwendel können auch z.B. zwei Heizwendel verwendet werden.

Das Heizelement, das zum Anordnen auf dem zumindest einen Leitungsverbinder vorgesehen ist, steht erfindungsgemäß mit einer größeren Länge über die Endfläche der Medienleitung vor als das zumindest eine weitere Heizelement. Dies kann durch entsprechendes Kürzen des zumindest einen weiteren Heizelements erfolgen. Zumindest der über die Endfläche des Leitungsverbinders bei der Herstellung der beheizbaren Medienleitung bzw. dann, wenn man die Heizelemente wieder von dem Leitungsverbinder abwickeln würde, vorstehende Abschnitt weist also bei dem zum Umwickeln des Leitungsverbinders vorgesehenen Heizelement eine größere Länge auf als der entsprechende Abschnitt des anderen Heizelements. Das weiter über eine Endfläche des Leitungsverbinders vorstehende Heizelement wird zum Umwickeln des oder Anordnen auf dem Leitungsverbinder und zum Beheizen vorgesehen, ist also das einzige zum Beheizen des Leitungsverbinders vorgesehene Heizelement.

Die mit den Heizelementen versehene, insbesondere umwickelte, Medienleitung wird in einer ersten Länge abgelängt, wobei die erste Länge der gewünschten späteren Endlänge der Medienleitung zuzüglich einer Zugabelänge entspricht. Die Zugabelänge richtet sich nach der Umwickellänge des Heizelements, die zum Umwickeln des zumindest einen Leitungsverbinders erforderlich ist. Nach dem ersten Ablängen wird das Befestigungsmittel, das die Heizelemente auf der Medienleitung fixiert, in dem Medienleitungsabschnitt der Zugabelänge entfernt. Als Befestigungsmittel kann beispielsweise ein Klebe-, Gewebe- oder Gewebeklebeband verwendet werden. Nach dem Entfernen des Befestigungsmittels können die Heizelemente von dem im Bereich der Zugabelänge angeordneten Medienleitungsabschnitt von diesem abgewickelt und das oder die nicht zum Umwickeln des Leitungsverbinders vorgesehene(n) Heizelement(e) gekürzt bzw. abgetrennt werden. Es verbleibt lediglich das eine zum Umwickeln des Leitungsverbinders vorgesehene Heizelement mit dem gewünschten Längenüberstand, das dann also eine Längendifferenz zu dem oder den anderen Heizelement(en) aufweist. Die Medienleitung wird nachfolgend um die Zugabelänge gekürzt, der oder die Leitungsverbinder endseitig an der Medienleitung angeordnet und mit dieser verbunden und das eine nun längere Heizelement an oder auf dem zumindest einen Leitungsverbinder angeordnet. Je nach Anwendungsfall kann lediglich ein Leitungsverbinder mit nur einem Heizelement versehen werden und der andere endseitige Leitungsverbinder der Medienleitung mit zwei oder sogar mehr Heizelementen. Es können jedoch auch beide endseitigen Leitungsverbinder mit nur jeweils einem der Heizelemente versehen, insbesondere umwickelt werden.

Die Steigung der Bewicklung auf der Medienleitung kann abschnittsweise variieren, wobei die Heizelemente abschnittsweise mit einer geringeren Steigung als in dem übrigen Bewicklungsbereich um die Medienleitung herum gewickelt sein können. Insbesondere kann die Steigung der Bewicklung auf der Medienleitung 10 bis 40 mm, insbesondere 20 bis 30 mm betragen. Bevorzugte Leitungsdurchmesser sind dabei beispielsweise 4 × 1 mm, 5 × 1 mm und 8 × 1 mm. Bei zum Verbessern der Beeinflussbarkeit der Heizleistung zwischen der Medienleitung und dem zumindest einen Leitungsverbinder können entlang der konfektionierten Medienleitung drei Heizelemente, insbesondere Heizlitze, vorgesehen sein, wobei ein Heizelement auf dem einen Leitungsverbinder und zwei entlang der Medienleitung angeordnet sein können, wobei eines der beiden entlang der Medienleitung geführten Heizelemente zum Anordnen auf dem anderen Leitungsverbinder dient. Im sog. Heißbereich bzw. heißen oder wärmeren Bereich einer beheizbaren Medienleitung, die in der Nähe von stark Wärme abgebenden Einrichtungen, wie einen Motor oder Abgasstrang, angeordnet ist, kann durch die dort vorhandene Wärmestrahlung häufig bereits ein Erwärmen des durch die beheizbare Medienleitung strömenden Mediums erfolgen, diese also zum Auftauen desselben bei niedrigen Umgebungstemperaturen außerhalb eines Fahrzeugs ausreichen. Lediglich in dem von einer solchen Wärmequelle entfernten Bereich der beheizbaren Medienleitung, dem sog. Kaltbereich, z.B. in der Nähe eines Tanks eines Fahrzeugs, wird eine intensive Beheizung der Medienleitung sowie von deren Leitungsverbinder vorgesehen. Bei einer solchen Konstellation können somit drei Heizelemente vorgesehen werden, wobei das eine separate Heizelement auf dem Leitungsverbinder im Kaltbereich und zwei entlang der Medienleitung angeordnet sind, von denen eines endseitig gekürzt wird und das andere, dann vergleichsweise längere Heizelement zum Anordnen auf dem anderen Leitungsverbinder im Heißbereich dient.

Bei lediglich zwei Heizelementen, insbesondere Heizlitzen, kann bei einem Leitungsdurchmesser von 8 × 1 mm die Steigung 19 bis 21 mm betragen, bei einem Leitungsdurchmesser von 5 × 1 mm 19 bis 23 mm und bei einem Leitungsdurchmesser von 4 × 1 mm 22 bis 29 mm. Bei Vorsehen lediglich zweier Heizelemente entlang der gesamten konfektionierten beheizbaren Medienleitung ist keine Heizleistungsvariation zwischen der Medienleitung und den Leitungsverbindern möglich, bei Vorsehen von vier Heizelementen ist demgegenüber die Heizleistung beliebig einstellbar. Zum Verbessern der Beeinflussbarkeit der Heizleistung zwischen der Medienleitung und dem zumindest einen Leitungsverbinder sind daher bevorzugt vier Heizelemente, insbesondere Heizlitzen, vorgesehen.

Die Heizleistung der Heizelemente entlang der Medienleitung beträgt vorteilhaft 20 bis 8 W/m, insbesondere 14 W/m, und an dem zumindest einen Leitungsverbinder 1 bis 4 W, insbesondere 1,5 W. Diese unterschiedliche Heizleistung entlang der Medienleitung und an den Leitungsverbindern kann durch Anordnen lediglich eines Heizelements an dem Leitungsverbinder erzielt werden. Das Heizelement kann dabei spiralförmig und/oder mäandriert um den Leitungsverbinder herum gewickelt oder langgestreckt um den Leitungsverbinder herum angeordnet sein.

Die Heizelemente der beheizbaren Medienleitung können in Reihe und/oder parallel geschaltet sein. Die Heizelemente können dabei offen gelassen oder elektrisch miteinander und/oder mit Kaltleitern und/oder mit einem Brückenelement und/oder Füllelement verbunden in Reihe oder parallel geschaltet werden. Die Enden der Heizelemente können somit mit Kaltleitern elektrisch verbunden und/oder durch zumindest ein Füllelement verstärkt und mit Kaltleitern elektrisch verbunden sein, insbesondere gecrimpt sein. Gerade bei Verwenden von Heizwendeln aus Heizdrähten tritt das Problem auf, dass diese zum direkten Verbinden zu dünn sind, weswegen zur Verstärkung ein Füllelement verwendet werden kann, so dass eine gute Verbindung mit den Kaltleitern erfolgen kann. Ferner können sie miteinander elektrisch verbunden und/oder durch zumindest ein Füllelement verstärkt und miteinander elektrisch verbunden, insbesondere gecrimpt, sein. Unter Kaltleitern werden Leiter verstanden, die nicht zum Beheizen vorgesehen sind, sondern dem Anschluss der Heizleiter an eine Energieversorgung (Strom- oder Spannungsquelle) dienen. Üblicherweise weisen sie entsprechend einen geringeren Widerstand als die Heizleiter auf. Unter einem Füllelement wird vorliegend beispielsweise Litzenmaterial verstanden, insbesondere auch von einer Kaltleiterlitze, das, sofern der Heizleiter für eine Crimpverbindung zu dünn ist, zum Auffüllen mit in diese Crimpverbindung eingefügt wird.

Bei Verwendung von Heizwendeln aus Heizdrähten kann ein direktes Vercrimpen der Enden miteinander problematisch sein, da diese zumeist zu dünn sind, so dass sich das Vorsehen eines Füllelementes zum Vergrößern des Durchmessers eignet. Ebenso ist es möglich, dass die Enden der Heizelemente durch zumindest ein Brückenelement elektrisch miteinander verbunden und/oder durch zumindest ein Füllelement verstärkt und durch zumindest ein Brückenelement elektrisch miteinander verbunden, insbesondere gecrimpt, sein. Bei Vorsehen eines solchen Brückenelements können Reihen- oder Parallelschaltungen der Heizelemente erzeugt werden. Ansonsten können die Enden der Heizelemente auch offen gelassen werden, so dass sich eine Parallelschaltung der Heizelemente ergibt, oder kurzgeschlossen werden, so dass sich eine Reihenschaltung ergibt. Durch geeignete Steck- bzw. Verschaltungsvarianten können sowohl Reihen- als auch Parallelstromkreise mit den Heizelementen erzeugt werden.

Als weiter vorteilhaft erweist es sich, die Enden der Heizelemente und/oder Verbindungs- oder Crimpstellen in einer den Leitungsverbinder zumindest teilweise umgebenden Kapselung aufzunehmen. Hierdurch kann eine thermische Isolation und/oder ein mechanischer und/oder chemischer Schutz für die in der Kapselung aufgenommenen Enden der Heizelemente sowie die Crimp- oder Verbindungsstellen geschaffen werden. Eine solche Kapselung kann in Form eines Gehäuses, eines Schrumpfschlauchs oder auch durch Umspritzen ausgebildet werden. Bei Vorsehen eines Gehäuses als Kapselung kann eine thermische Isolation durch darin eingeschlossene Luft erzielt werden.

Sofern sich herausstellt, dass das für das Verbinden bzw. Crimpen zur Verfügung stehende Material zu gering ist, um eine feste Verbindung zu schaffen, kann auch hier ein Füllelement vorgesehen und zumindest in die Verbindungsstelle eingebracht werden. Insbesondere kann der Leitungsverbinder in einer ersten Aufnahme der Kapselung zumindest teilweise aufgenommen werden. Die Heizelementenden können in zumindest einer zweiten Aufnahme der Kapselung angeordnet werden. Hierdurch können die untereinander bzw. mit Kaltleitern bzw. einem Brückenelement verbundenen Enden der Heizelemente gegen Beschädigung geschützt innerhalb der Kapselung, beispielsweise einer den Leitungsverbinder zumindest teilweise umgebenden Schutzkappe, aufgenommen werden.

Im Hinblick auf die Art und Weise des Crimpens der Heizelementenden erfolgt vorteilhaft eine Optimierung zwischen der Stärke der Heizelemente und dem möglichen Crimpprozess, um eine niederohmige Verbindungs- bzw. Crimpstelle zu erhalten.

Zum Fixieren der Position des Heizelements nach dem Umwickeln des Leitungsverbinders und insbesondere vor dem Anordnen der insbesondere gecrimpten Heizelementenden in den entsprechenden Aufnahmen der Kapselung können die Heizelemente durch zumindest ein Halteelement an dem Leitungsverbinder positionsfixiert werden, insbesondere durch hakenförmige Halteelemente und/oder ein Fixierband. Die Halteelemente dienen dabei insbesondere auch dem Zuführen der Heizelementenden zu der zweiten Aufnahme des Isolations- und/oder Schutzgehäuses, wenn dieses den Leitungsverbinder zumindest teilweise ummantelnd an diesem angeordnet wird. Als Fixierband kann ein Klebe- oder Gewebe- oder Gewebeklebeband verwendet werden.

Als weiter vorteilhaft erweist es sich, die Heizelemente zu beschichten, insbesondere eine Korrosionsschutzbeschichtung in Form einer metallischen Beschichtung, wie einer Nickelbeschichtung, Silberbeschichtung oder einer Verzinnung, vorzusehen. Einen optimalen Schutz und eine besonders gute Wirtschaftlichkeit wird bei Vorsehen einer Nickelbeschichtung erzielt, die härter und beständiger, auch im Fertigungsprozess des Heizelements, als beispielsweise eine Verzinnung ist. Ferner können die Heizelemente eine Isolationsschicht aufweisen, insbesondere eine Fluorpolymer- bzw. FEP-Isolationsschicht, also eine Perfluorethylenpropylenschicht-Ummantelung. Durch Vorsehen einer solchen Beschichtung können Kriechströme, die durch Korrosion hervorgerufen werden können, vermieden werden. Das Vorliegen einer Fluorpolymer-Isolationsbeschichtung erweist sich ferner als vorteilhaft, da hierdurch eine besonders niedrige Permeation bei Anwesenheit von Ammoniak innerhalb der Medienleitung erzielt werden kann. Hierdurch können somit die Heizelemente geschützt werden. Auch einzelne Heizwendel können beschichtet sein. Eine Heizwendel kann eine Innenfaser aus einem aromatischen Polyamid, beispielsweise Kevlar^{®} Detex 1580, umfassen, wobei diese Innenfaser einen Durchmesser von 0,4mm aufweisen kann. Je Heizwendel werden lediglich 3 bis 4 Heizdrähte bzw. Heizdrahtadern vorgesehen, wobei eine Einzelader beispielsweise einen Durchmesser von 0,14 bis 0,16 mm aufweisen kann. Der Gesamtaußendurchmesser der Heizwendel kann 0,6 bis 0,8 mm betragen.

Nicht erfindungsgemäß, können die Heizelemente nicht nur auf der Außenseite der Medienleitung angeordnet sein, sondern auch auf deren Innenseite, wenn dies gewünscht wird. Auch bei einer solchen Ausführungsvariante wird jedoch jeweils nur ein Heizelement, insbesondere eine Heizlitze, zum Anordnen auf bzw. an dem jeweiligen Leitungsverbinder verwendet.

Zur näheren Erläuterung der Erfindung werden im Folgenden Ausführungsbeispiele von dieser näher anhand der Zeichnungen beschrieben. Diese zeigen in:
- Figur 1a: eine Seitenansicht einer mit zwei Litzen eines Heizelements umwickelten und in einer ersten erfindungsgemäßen Bearbeitungsstufe abgelängten Medienleitung,
- Figur 1b: eine Seitenansicht der Medienleitung gemäß Figur 1a in einer zweiten erfindungsgemäßen Bearbeitungsstufe, wobei die Litzen endseitig von der Medienleitung in einem Abschnitt abgewickelt werden und die Medienleitung erneut abgelängt wird,
- Figur 1c: eine Seitenansicht einer erfindungsgemäßen Anordnung eines Heizelementes auf der Außenseite eines Leitungsverbinders,
- Figur 1d: eine Seitenansicht der fertig montierten und mit außenseitiger Kapselung versehenen erfindungsgemäßen beheizbaren Medienleitung,
- Figur 2a: eine Seitenansicht einer erfindungsgemäßen Medienleitung in einer zweiten Ausführungsform,
- Figur 2b: eine Seitenansicht der Medienleitung gemäß Figur 2a mit endseitig abgewickelten Heizelementen,
- Figur 2c: eine Seitenansicht der Medienleitung gemäß Figur 2a mit endseitig abgewickelten Heizelementen, wobei das eine Heizelement gekürzt ist,
- Figur 3: ein elektrisches Ersatzschaltbild zweier in Reihe geschalteter Heizelemente mit Kaltleiteranschluss, und
- Figur 4: ein elektrisches Ersatzschaltbild zweier parallel geschalteter Heizelemente mit zwei endseitigen Kaltleiteranschlüssen.

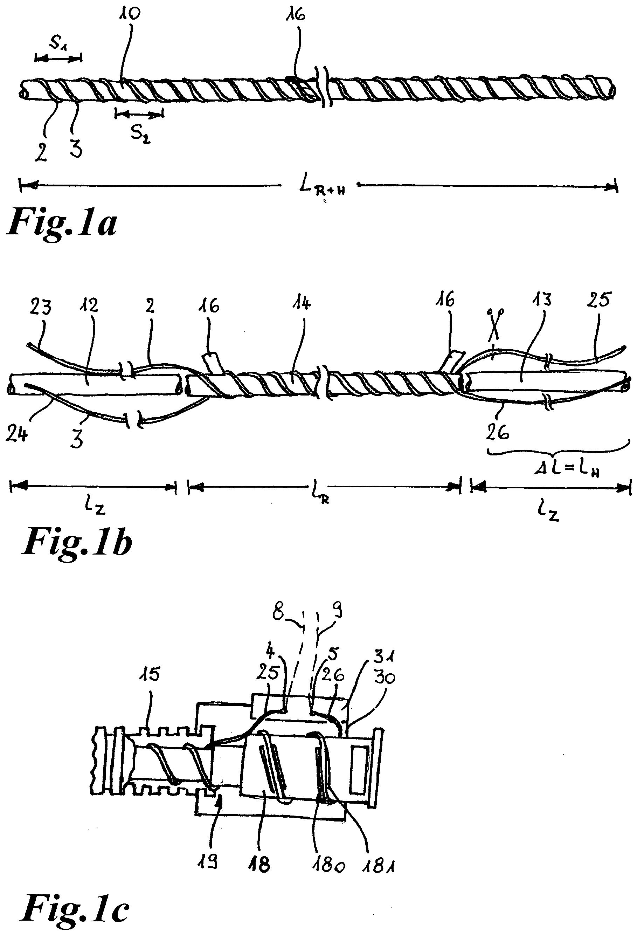

Figur 1a zeigt eine rohr- oder schlauchförmige Medienleitung 10, die von zwei Heizelementen 2, 3 umwickelt ist. Die Medienleitung 10 mit den beiden darum gewickelten Heizelementen, beispielsweise Heizlitzen, 2, 3 ist ein vorkonfektionierter Abschnitt einer langen aus einem kontinuierlichen Bewicklungsprozess einer rohrförmigen Leitung gewonnenen Medienleitung. Das erste Heizelement 2 ist mit einer Steigung S₁ und das zweite Heizelement 3 ist mit einer Steigung S₂ aufgewickelt, wobei beide Steigungen einander entsprechen oder ggf. auch leicht variieren können, um einen optimalen Wärmeeintrag in die Medienleitung zu ermöglichen. Die beiden Heizelemente 2, 3 werden durch ein Befestigungsmittel 16 auf der Außenfläche der Medienleitung 10 befestigt, wobei dieses Befestigungsmittel ein Klebe-, Gewebeklebe-, Gewebeband sein kann. In Figur 1a ist dies lediglich angedeutet.

Die rohr- oder schlauchförmige Medienleitung 10 entsprechend Figur 1a ist auf eine Länge L_{R+H} abgelängt. Diese Länge entspricht der gewünschten Medienleitungslänge I_{R} zuzüglich einer Zugabelänge, auf der die Heizelementlänge I_{H} aufgewickelt ist, die zum Umwickeln von Leitungsverbindern, mit denen die Medienleitung zum Anschließen an Aggregate etc. in einem Fahrzeug versehen wird, vorgesehen ist. In Figur 1b sind die an beiden Enden der abgelängten Medienleitung 10 vorgesehenen Zugabelängen I_{z} bzw. zugegebenen Medienleitungsenden 12, 13 zu sehen. Die freien Heizelementenden 23, 24, 25, 26 sind ebenfalls in Figur 1b gezeigt. Diese vier freien Heizelementenden waren zuvor auf den mit der Zugabelänge abgelängten Medienleitungsenden 12, 13 angeordnet. Nach dem Abwickeln der Heizelementenden 23, 24, 25, 26 von den beiden Medienleitungsenden 12, 13 werden diese, wie in Figur 1b angedeutet, von dem mittleren Medienleitungsabschnitt 14 abgetrennt. Der mittlere Medienleitungsabschnitt 14 weist die gewünschte Medienleitungslänge I_{R} auf, die für den jeweiligen Anwendungsfall erforderlich ist. Bspw. kann die Medienleitungslänge I_{R} hier 4,5 m oder aber auch nur 0,2 m betragen. Dies ist abhängig von dem jeweiligen späteren Verwendungsort und Verwendungszweck der beheizbaren Medienleitung.

Nach dem Abtrennen der beiden Medienleitungsenden 12, 13 werden die beiden endseitigen Schnittkanten des mittleren Medienleitungsabschnitts 14 gesäubert. Nachfolgend wird ein Wellrohr 15 axial auf die Medienleitung bzw. deren mittleren Medienleitungsabschnitt 14 aufgeschoben, wobei das Wellrohr den Medienleitungsabschnitt vollumfänglich umgibt. Danach wird an dem einen Ende des mittleren Medienleitungsabschnitts 14 ein erster Leitungsverbinder 17 und an dem anderen Ende ein zweiter Leitungsverbinder 18 angebracht, insbesondere durch Dornen, Laserschweißen oder andere Fügeverfahren.

Nach dem Verbinden des Medienleitungsabschnitts 14 mit den beiden Leitungsverbindern 17, 18, also nach dem Verbinden des "fluidischen" Teils der beheizbaren Medienleitung, also des Teils, durch den das Fluid strömen kann, erfolgt das Anordnen des zum Beheizen vorgesehenen Teils auf den beiden Leitungsverbindern. Hierzu wird an zumindest einem Ende eines der Heizelemente 2, 3 gekürzt, da nur ein Heizelement zum Beheizen des Leitungsverbinders 17 bzw. 18 dienen soll. Wie in Figur 1b angedeutet, wird das Heizelementende 25 gekürzt und das Heizelementende 26 somit um die Längendifferenz Δl länger als das Heizelementende 25 belassen, da das Heizelementende 26 zum Anordnen auf dem Leitungsverbinder 18 dienen soll. An dem anderen Ende der Heizelemente 2, 3 kann eines der beiden Enden 23, 24 ebenfalls gekürzt werden, um auch dort nur eine Heizelement zum Anordnen auf dem Leitungsverbinder 17 vorzusehen. Ebenso ist es möglich, einen der Leitungsverbinder mit nur einem Heizelement zu versehen und den anderen mit zwei Heizelementen.

In dem in Figur 1c gezeigten Beispiel ist der Leitungsverbinder 18 mit dem Heizelement 3 bzw. dessen Ende 26 umwickelt. In Übergangsbereichen 19 von dem mittleren Medienleitungsabschnitt 14 zu dem jeweiligen Leitungsverbinder 17, 18 sind keine Crimpstellen der Heizelemente vorgesehen. Vielmehr wird das Heizelementende 26 durchgängig von der Medienleitung 10 über den Leitungsverbinder 18 hinweg gewickelt bzw. auf diesem angeordnet. Das gekürzte Heizelementende 25 wird, wie Figur 1c zu entnehmen ist, direkt von der Medienleitung 10 über den Übergangsbereich 19 hinweg geführt und mit einem Kaltleiter 8 verbunden, der zum Anschluss an eine Strom- oder Spannungsquelle dient. Auch das Heizelementende 26 wird, insbesondere erst nach dem Umwickeln des Leitungsverbinders 18, mit einem Kaltleiter 9 verbunden. Unter Kaltleitern werden Leiter verstanden, die nicht zum Beheizen vorgesehen sind, sondern dem Anschluss der Heizleiter an eine Energieversorgung (Strom- oder Spannungsquelle) dienen. Kaltleiter weisen üblicherweise einen geringeren Widerstand als die Heizleiter auf.

Die Steigung der Wicklung auf der Medienleitung und den beiden Leitungsverbindern 17, 18 kann variieren, wie in Figur 1c beispielhaft angedeutet. Wie in Figur 1c angedeutet, ist entlang der Medienleitung eine etwa gleichbleibende Steigung der Wicklung der beiden Heizelemente 2, 3 vorgesehen, in dem Übergangsbereich 19 sind die beiden Heizelemente 2, 3 etwa parallel zur Medienleitung geführt und auf dem Leitungsverbinder 18 ist eine andere Steigung des gewickelten Heizelementendes 26 vorgesehen. Dieses kann sich bei den beiden Leitungsverbindern 17, 18 noch unterscheiden.

Auf den Leitungsverbindern 17, 18 wird das jeweilige Heizelementende 26 bzw. 25, 23 oder 24, wie in Figur 1c angedeutet, in Führungseinrichtungen 180 und/oder Halteeinrichtungen gehalten und in ihrer Position fixiert. Dies erleichtert eine reproduzierbar genaue Positionierung und gewährleistet das langzeitige Aufrechterhalten von dieser bei der Verwendung der beheizbaren Medienleitung in einem Fahrzeug, wie einem Lastkraftwagen, auch unter starker mechanischer Beanspruchung. Als Führungs- und/oder Halteeinrichtungen können beispielsweise Wickelnuten auf der Außenseite des oder der Leitungsverbinder vorgesehen sein, wobei die Wickelnuten durch vorstehende Rippen 181 oder Formelemente auf der Außenseite des Leitungsverbinders begrenzt bzw. gebildet werden können. Hierdurch ist eine eindeutige Positionierung der Litzen auf der Außenseite der Leitungsverbinder möglich, so dass eine Fixierung durch ein Klebe-, Gewebeklebe- oder Gewebeband, wie dies entlang der Medienleitung vorgesehen ist, hier entfallen kann. Sind derartige Wickelnuten nicht vorgesehen, kann selbstverständlich auch im Bereich des Leitungsverbinders 17, 18 eine Fixierung der Heizelemente 2, 3 durch beispielsweise ein Klebe-, Gewebeklebe- oder Gewebeband oder eine anderweitige Fixiereinrichtung erfolgen.

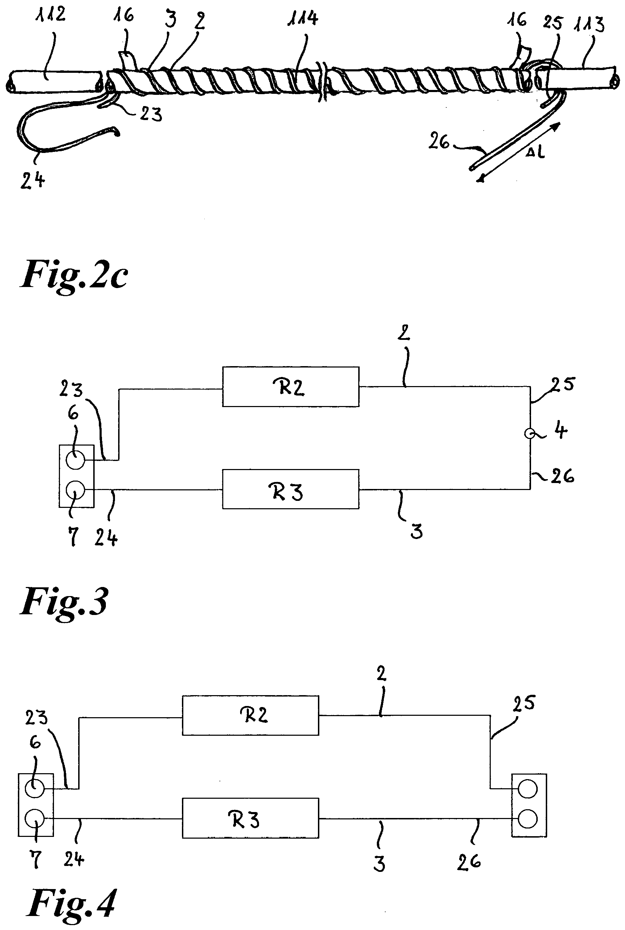

Die Heizelementenden 25, 26 können nicht nur, wie erwähnt, mit Kaltleitern 8, 9 verbunden werden, sondern auch miteinander. Hierdurch entsteht eine geschlossene Schleife der beiden Heizelemente 2, 3 mit dann lediglich noch zwei offenen Enden, nämlich den beiden Heizelementenden 23, 24, die ihrerseits mit Kaltleitern 8,9 verbunden werden. Eine solche Ausbildung ist in Figur 3 als Verschaltungsbild angedeutet, während Figur 4 eine Parallelschaltung der beiden Heizelemente 2, 3 zeigt, bei der beide Heizelemente 2, 3 endseitig offen gelassen und mit jeweiligen Anschlüssen für Kaltleiter versehen werden. Die Heizelemente 2, 3 sind in diesen beiden Figuren jeweils durch ihre Widerstände R2, R3 angedeutet, die gleich oder unterschiedlich ausgebildet sein können. Bei der Reihenschaltung gemäß Figur 3 sind die beiden Verbindungsstellen 6, 7 an den Heizelementenden 23, 24 zum Verbinden mit den Kaltleitern 8, 9 vorgesehen und die beiden Heizelementenden 25, 26 über eine Crimpstelle 4 miteinander verbunden.

Die Enden 23, 24, 25, 26 der Heizelemente 2, 3 können durch ein Brückenelement elektrisch miteinander verbunden sein. Dies ist in den Figuren allerdings nicht gezeigt. Sofern der Durchmesser der Heizelemente zu gering ist, an ein Füllelement zum Verstärken verwendet werden, nicht nur bei Vorsehen eines Brückenelements, sondern auch beim Verbinden der Heizelemente miteinander und/oder mit Kaltleitern.

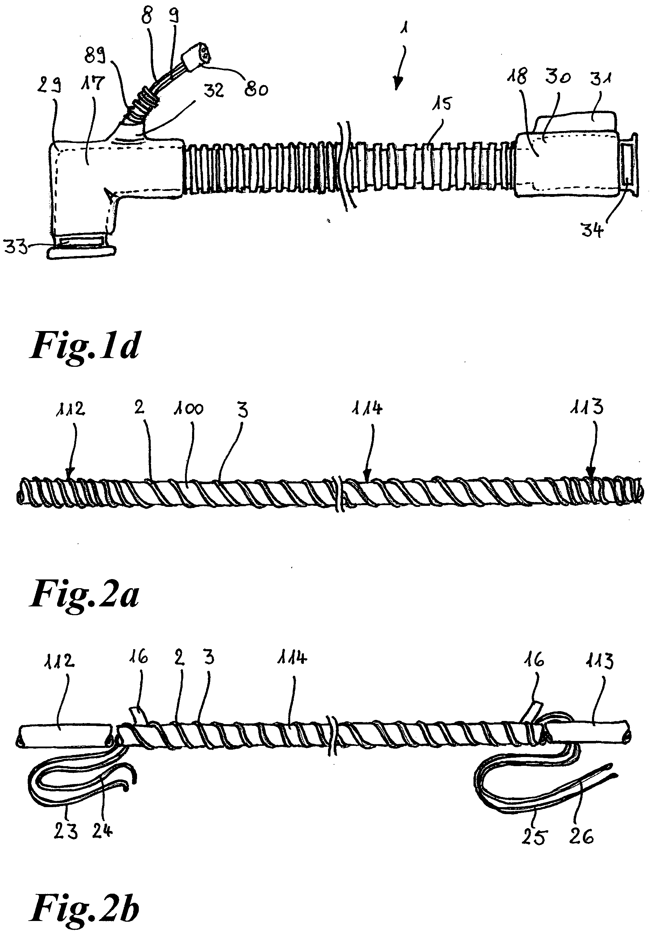

Wie in Figur 1c und auch 1d angedeutet, wobei in letzterer die fertig konfektionierte beheizbare Medienleitung 1 gezeigt ist, werden die beiden Leitungsverbinder 17, 18 in einer jeweiligen Kapselung 29, 30 aufgenommen. Die Kapselung 30 weist in der Ausführungsform nach Figur 1c einen Aufnahmeabschnitt 31 für Verbindungs- bzw. Crimpstellen 4, 5 auf, also Verbindungsstellen zwischen den beiden Heizelementenden 25, 26 und den beiden Kaltleitern 8, 9 bzw. den beiden Heizelementenden 25, 26, wenn diese zum Ausbilden einer Reihenschaltung miteinander verbunden werden, wie vorstehend erwähnt. Der Aufnahmeabschnitt 31 ist als leicht auskragender Teil des Leitungsverbinders 18 in Figur 1c und 1d angedeutet, kann jedoch auch bei anderweitiger Formgebung der Kapselung in diese so mit eingegliedert werden, dass der Aufnahmeabschnitt von außen nicht wahrnehmbar ist.

Die Kapselung 29, die den Leitungsverbinder 17 umgibt, weist einen Abzweigstutzen 32 auf, durch den die Kaltleiter 8, 9 auf die Außenseite der Kapselung 29 geführt werden können. An den Abzweigstutzen kann sich eine Ummantelungseinrichtung der Kaltleiter anschließen bzw. teilweise darin aufgenommen sein, wie z.B. ein Wellrohr 89. Hier ist somit ein knicksicheres und stabiles Herausführen der Kaltleiter zum Anschließen des Heizelementes an eine Strom- oder Spannungsquelle möglich. Dies ist in Figur 1d zu sehen, wobei die Kaltleiter zum Anschluss an eine Strom- oder Spannungsquelle mit einem entsprechenden Steckverbinder 80 versehen sind. Sind an den Heizelementenden 25, 26 endseitig ebenfalls Kaltleiter 8, 9 angeschlossen, können diese entweder durch einen entsprechenden Abzweigstutzen aus der Kapselung 30 herausgeführt werden, oder sie können entlang der Medienleitung 10 zu der Kapselung 29 und dort durch den Abzweigstutzen 32 heraus geführt werden. Durch das geschützte Herausführen der Kaltleiter aus der Kapselung kann die Verbindung zwischen Kaltleiter und Heizelement fixiert und gegen Erschütterungen, die beispielsweise im Betrieb insbesondere beim Einbau in einen Lastkraftwagen vorkommen können, nicht mehr zu einem ungewollten Lösen des Heizelementes von dem Kaltleiter führen bzw. dies so gut wie möglich vermieden werden.

Wie Figur 1d ferner entnommen werden kann, weisen die beiden Kapselungen 29, 30 jeweils endseitig Verbindungsöffnungen 33, 34 zum Einfügen von Halteelementen zum Rückhalten eines darin eingefügten Steckers, einer Kupplung oder eines Steckverbinders zum Verbinden mit einem Aggregat oder anderen Leitungen auf.

Beim Bewickeln der Medienleitung kann die Steigung über die Längserstreckung der Medienleitung hinweg leicht variieren, was sich durch Ausschöpfen des Toleranzbereichs und Vorsehen einer Steigung innerhalb einer Toleranz ergibt. Ebenfalls ist es möglich, beim kontinuierlichen Bewickeln von einem Ende der Medienleitung zum anderen eine bewusste Varianz der Steigung vorzusehen, zum Schaffen eines Heizelementvorrates oder aber auch zum Erzeugen eines über die Längserstreckung der Medienleitung hinweg unterschiedlichen Wärmeeintrags in diese. Je nachdem, an welcher Stelle ein besonders großer Wärmeeintrag gefordert wird, kann partiell eine variable Steigung bzw. eine geringere Steigung bei höherem gewünschten Wärmeeintrag vorgesehen werden. Bei einer Steigung S₁, S₂ von 10 bis 40 mm, insbesondere 20 bis 30 mm, kann ein Wärmeeintrag von 20 bis 8 W/m, insbesondere 14 W/m, im Bereich der Medienleitung 10 und an den Leitungsverbindern 17, 18 von 1 bis 4 W, insbesondere 1,5 W, vorgesehen werden, wenn diese lediglich mit einem Heizelement 2 bzw. 3 umwickelt sind bzw. diese auf diesen angeordnet ist.

Die Heizleistung der Heizelemente zwischen Medienleitung und Leitungsverbindern kann dann beliebig eingestellt werden, wenn anstelle von zwei Heizelementen drei verwendet werden, wobei jeweils eines nur zum Anordnen auf einem der beiden Leitungsverbinder 17, 18 verwendet werden kann und die verbleibenden beiden Heizelemente sich nur entlang der Medienleitung 10 erstrecken und in dem Übergangsbereich der Medienleitung zu dem mit dem dritten Heizelement versehenen Leitungsverbinder jeweils Crimp- bzw. Verbindungsstellen zum Verbinden der Heizelemente vorgesehen sind.

Figur 2a zeigt eine Seitenansicht einer Ausführungsvariante der vorkonfektionierten Medienleitung 100, bei der die Steigung der Umwicklung mit den Heizelementen 2, 3 über die Länge der Medienleitung hinweg variiert. An den beiden Medienleitungsenden 112, 113 ist jeweils eine geringere Steigung der Bewicklung vorgesehen als im mittleren Medienleitungsabschnitt 114. Es ist hier somit eine selektive Bewicklung bzw. Bevorratung von Heizelementen vorgesehen, wobei die Medienleitung 100 so vorkonfektioniert wird, dass jeweils abschnittsweise die Heizelemente mit einer geringeren Steigung gewickelt werden, um einen ausreichenden Vorrat - nach dem Abtrennen von Medienleitungsenden zum Weiterkonfektionieren zu einer beheizbaren Medienleitung - für das Umwickeln der Leitungsverbinder zu haben. Der Vorteil dieser Ausführungsvariante gegenüber der in den Figuren 1a und 1b gezeigten ist, dass die Medienleitungsenden 112 und 113 kürzer sind als die Medienleitungsenden 12 und 13, so dass Material, also Medienleitung, hier eingespart werden kann.

Die weitere Konfektionierung einer solchen vorkonfektionierten Medienleitung 100 erfolgt dahingehend, dass ein Abtrennen immer in dem Bereich der geringeren Wicklungssteigung erfolgt, so dass lediglich kürzere Teile der rohr- oder schlauchförmigen Medienleitung 100 abgetrennt und weggeworfen werden müssen im Vergleich zu der Lösung nach Figur 1a, bei der die abzutrennenden und wegzuwerfenden Medienleitungsenden 12, 13 größer sind als die Medienleitungsenden 112, 113 gemäß Figur 2b. Die jeweilige Zugabelänge I_{z} ist somit bei der Ausführungsform nach Figur 2a geringer als bei der Ausführungsform nach Figur 1b. Aufgrund der Wicklung mit geringerer Steigung kann mehr Heizelementlänge auf geringerer Medienleitungslänge untergebracht werden.

Die weitere Konfektionierung der Medienleitung 100 bzw. des mittleren Medienleitungsabschnitts 114 gemäß Figur 2b kann wie zu den Figuren 1a bis 1d beschrieben erfolgen. In Figur 2c ist dabei das Kürzen des einen Heizelementendes 25 bzw. auch des Heizelementendes 23 angedeutet, ebenso wie die sich hieraus ergebende Längendifferenz Δl der Heizelementenden 25 und 26 bzw. 23 und 24, wobei das Heizelementende 26 bzw. 24 wiederum zum Anordnen auf dem Leitungsverbinder 18 bzw. 17 verwendet wird.

Anstelle des Vorsehens von mit den Heizelementenden verbundenen Kaltleitern können grundsätzlich auch die Heizelementenden selbst in einen Steckverbinder geführt und mittels dessen direkt an eine Strom- oder Spannungsquelle angeschlossen werden. Ferner kann ein solcher Anschluss auch direkt im Leitungsverbinder oder der Kapselung integriert sein.

Neben einer Wärmeleitfähigkeit des Leitungsverbinders kann es im Heißbereich der konfektionierten beheizbaren Medienleitung, also in dem Bereich, in dem diese in der Nähe stark Wärme abgebender Einrichtungen, wie einem Abgasstrang bzw. einem Motor, angeordnet ist, im Unterschied zu dem Kaltbereich, der selbst wenig oder keine Wärme abgibt, so dass ein Beheizen dieses Bereichs der konfektionierten Medienleitung erforderlich ist, auch auf eine besondere Temperaturfestigkeit ankommen. Vorteilhaft kann für den im Heißbereich angeordneten Leitungsverbinder ein im Vergleich zu dem für den Leitungsverbinder im Kaltbereich verwendeten Material temperaturbeständigeres Material verwendet werden, beispielsweise ein temperaturbeständiges Polymer, wie PPA (Polyphthalamid). Als weiter vorteilhaft erweist es sich, wenn auch die Medienleitung im Heißbereich aus einem temperaturbeständigeren Material besteht. Hierbei eignet sich das Vorsehen einer zweigeteilten Leitung. Der eine Leitungsverbinder bzw. Quick Connector im Heißbereich und der Teil der Medienleitung dort können somit z.B. aus PPA bestehen und die restliche im Kaltbereich angeordnete Medienleitung ebenso wie der Leitungsverbinder dort, der als Steckverbinder ausgebildet sein kann, aus einem weniger temperaturbeständigen Material, wie z.B. aus Polyamid 12. Der Leitungsverbinder kann dort auch z.B. aus PA12 GF30 bestehen, oder einem Polyamid 6. Bei Verwendung einer schlauchförmigen Medienleitung kann dieser im Heißbereich aus EPDM (Ethylen-Propylen-Dien-Monomer) bestehen, in Kombination mit einem Leitungsverbinder aus PPA.

Der aus einem temperaturbeständigen Material, wie PPA, bestehende Teil der Medienleitung kann z.B. von einem Gewebetape umwickelt sein und einem Hüll- oder Wellrohr aus temperaturbeständigem TPC (Thermoplastischen Polyesterelastomer) aufgenommen sein. Eine Crimpverbindung im Heißbereich besteht z.B. aus der Legierung K-75 und ein Schrumpfschlauch aus FEP (Perfluorethylenpropylen). Die übrige Medienleitung (im Kaltbereich) aus PA 12 kann mit einem Standardtape umwickelt und von einem Hüll- bzw. Wellrohr aus modifiziertem Polypropylen umgeben sein. Die Crimpverbindung in diesem Kaltbereich kann aus CuZn30 und ein Schrumpfschlauch aus XPE (strahlenvernetzes Polyethylen) bestehen.

PPA eignet sich besonders für höhere Temperaturen und weist ein sehr gutes Permeationsverhalten auf, ist also kaum durchlässig auch für aggressive durch die beheizbare konfektionierte Medienleitung strömende Medium.

Neben den im Vorstehenden genannten und in den Figuren gezeigten Ausführungsvarianten von konfektionierten beheizbaren Medienleitungen können noch zahlreiche weitere gebildet werden, bei denen jeweils die Medienleitung mit zumindest zwei auf deren Außenseite angeordneten Heizelementen und mit zumindest einem Leitungsverbinder versehen ist, wobei zum Beheizen des zumindest einen Leitungsverbinders nur eines der Heizelemente diesen zumindest teilweise umgebend an oder auf diesem angeordnet ist.

### Bezugszeichenliste

- 1: konfektionierte beheizbare Medienleitung
- 2: Heizelement
- 3: Heizelement
- 4: Crimpstelle
- 5: Crimpstelle
- 6: Verbindungsstelle
- 7: Verbindungsstelle
- 8: Kaltleiter
- 9: Kaltleiter
- 10: Medienleitung
- 12: Medienleitungsende
- 13: Medienleitungsende
- 14: mittlerer Medienleitungsabschnitt
- 15: Wellrohr
- 16: Befestigungsmittel
- 17: erster Leitungsverbinder
- 18: zweiter Leitungsverbinder
- 19: Übergangsbereich
- 23: Heizelementende
- 24: Heizelementende
- 25: Heizelementende
- 26: Heizelementende
- 29: Kapselung
- 30: Kapselung
- 31: Aufnahmeabschnitt
- 32: Abzweigstutzen
- 33: Verbindungsöffnung
- 34: Verbindungsöffnung
- 80: Steckverbinder
- 89: Wellrohr
- 100: Medienleitung
- 112: Medienleitungsende
- 113: Medienleitungsende
- 114: mittlerer Medienleitungsabschnitt
- 180: Führungseinrichtung
- 181: Rippe
- S₁: Steigung Heizelement 2
- S₂: Steigung Heizelement 3
- L_{R+H}: Länge Medienleitung im ersten Fertigungsschritt
- I_{R}: Medienleitungslänge
- I_{H}: Heizelementlänge
- I_{z}: Zugabelänge
- Δl: Längendifferenz
- R2: Widerstand Heizelement 2
- R3: Widerstand Heizelement 3

## Patentansprüche

1. Verfahren zum Herstellen einer beheizbaren Medienleitung (1), umfassend eine Medienleitung (10,100), zumindest einen Leitungsverbinder (17,18) und zumindest zwei Heizelemente (2,3),
**dadurch gekennzeichnet, dass**
- die Medienleitung (10,100) kontinuierlich mit den Heizelementen (2,3) bewickelt vorkonfektioniert wird, wobei die Heizelemente (2,3) auf der Medienleitung (10,100) durch zumindest ein Befestigungsmittel (16) befestigt oder fixiert werden,
- die Medienleitung (10,100) anwendungsspezifisch in einer ersten Länge (L_{R+H}) abgelängt wird, die der gewünschten Medienleitungslänge (I_{R}) zuzüglich einer Zugabelänge (I_{z}) entspricht, die die zum Umwickeln des zumindest einen Leitungsverbinders (17,18) und eines Übergangsbereichs (19) zwischen Medienleitung (10,100) und Leitungsverbinder (17,18) erforderliche Heizelementlänge (I_{H}) trägt,
- das Befestigungsmittel (16) in dem der Zugabelänge (I_{Z}) entsprechenden Medienleitungsabschnitt (12,13,112,113) entfernt wird,
- das Heizelement (2,3) von dem der Zugabelänge (I_{Z}) entsprechenden Medienleitungsabschnitt (12,13,112,113) abgewickelt wird,
- die Medienleitung (10,100) in der gewünschten Medienleitungslänge (I_{R}) zu einem zweiten Medienleitungsabschnitt (14,114) abgelängt wird,
- vor oder nach dem zweiten Ablängen der Medienleitung eines der Heizelemente (2,3) gekürzt wird,
- der zweite Medienleitungsabschnitt (14,114) mit dem zumindest einen Leitungsverbinder (17,18) verbunden wird, und
- der zumindest eine Leitungsverbinder (17,18) mit dem ungekürzten Heizelement (2,3) umwickelt wird, wobei zum Beheizen des zumindest einen Leitungsverbinders (17,18) nur eines der Heizelemente (2,3) diesen zumindest teilweise umgebend auf diesem angeordnet wird.

2. Verfahren nach Anspruch 1,
**dadurch gekennzeichnet, dass**
nach dem Abtrennen der beiden Medienleitungsenden (12,13) ein Hüllrohr (15) axial auf den zweiten Medienleitungsabschnitt (14,114) aufgeschoben wird, wobei das Hüllrohr (15) den Medienleitungsabschnitt (14,114) vollumfänglich umgibt, und dass die beiden Leitungsverbinder (17,18) in einer jeweiligen Kapselung (29,30) aufgenommen werden.

3. Verfahren nach Anspruch 1 oder 2,
**dadurch gekennzeichnet, dass**
die Heizelemente (2,3) offen gelassen oder elektrisch miteinander und/oder mit Kaltleitern (8,9) und/oder mit einem Brückenelement und/oder Füllelement verbunden oder parallel geschaltet werden.

4. Konfektionierte beheizbare Medienleitung (1) mit einer Medienleitung (10,100) mit zumindest zwei auf deren Außenseite angeordneten Heizelementen (2,3) und mit zumindest einem Leitungsverbinder (17,18), wobei
zum Beheizen des zumindest einen Leitungsverbinders (17,18) nur eines (3) der zumindest zwei Heizelemente (2,3), die entlang der Medienleitung (10,100) angeordnet sind, den Leitungsverbinder (17,18) zumindest teilweise umgebend an oder auf diesem angeordnet ist und das Heizelement (3), das zum Anordnen auf dem zumindest einen Leitungsverbinder (17,18) vorgesehen ist, mit einer größeren Länge (ΔI) über die Endfläche der Medienleitung (10,100) vorsteht als das zumindest eine weitere Heizelement (2).

5. Konfektionierte beheizbare Medienleitung (1) nach Anspruch 4,
**dadurch gekennzeichnet, dass**
die Steigung (S₁,S₂) der Bewicklung auf der Medienleitung (10,100) abschnittsweise variiert, wobei die Heizelemente (2,3) abschnittsweise mit einer geringeren Steigung als in dem übrigen Bewicklungsbereich um die Medienleitung (10,100) herum gewickelt sind.

6. Konfektionierte beheizbare Medienleitung (1) nach Anspruch 5,
**dadurch gekennzeichnet, dass**
die Steigung (S₁,S₂) der Bewicklung auf der Medienleitung 10 bis 40 mm, insbesondere 20 bis 30 mm beträgt.

7. Konfektionierte beheizbare Medienleitung (1) nach einem der Ansprüche 4 bis 6,
**dadurch gekennzeichnet, dass**
die Heizleistung der Heizelemente (2,3) entlang der Medienleitung (10,100) 20 bis 8 W/m, insbesondere 14 W/m, und an dem zumindest einen Leitungsverbinder (17,18) 1 bis 4 W, insbesondere 1,5 W, beträgt.

8. Konfektionierte beheizbare Medienleitung (1) nach einem der Ansprüche 4 bis 7,
**dadurch gekennzeichnet, dass**
zum Verbessern der Beeinflussbarkeit der Heizleistung zwischen der Medienleitung (10,100) und dem zumindest einen Leitungsverbinder (17,18) drei Heizelemente, insbesondere Heizlitzen, vorgesehen sind.

9. Konfektionierte beheizbare Medienleitung (1) nach einem der Ansprüche 4 bis 8,
**dadurch gekennzeichnet, dass**
das Heizelement (2,3) spiralförmig und/oder mäandriert um den Leitungsverbinder (17,18) herum gewickelt oder langgestreckt um den Leitungsverbinder (17,18) herum angeordnet ist.

10. Konfektionierte beheizbare Medienleitung (1) nach einem der Ansprüche 4 bis 9,
**dadurch gekennzeichnet, dass**
die Medienleitung (10,100) schlauchartig und/oder rohrförmig ausgebildet ist, insbesondere als Polyamid-Rohrleitung.

11. Konfektionierte beheizbare Medienleitung (1) nach einem der Ansprüche 4 bis 10,
**dadurch gekennzeichnet, dass**
die Heizelemente (2,3) durch ein Brückenelement in Reihe und/oder parallel geschaltet sind, insbesondere die Enden (23,24,25,26) der Heizelemente (2,3) durch zumindest ein Brückenelement elektrisch miteinander verbunden und/oder durch zumindest ein Füllelement verstärkt und durch zumindest ein Brückenelement elektrisch miteinander verbunden, insbesondere gecrimpt, sind.

12. Konfektionierte beheizbare Medienleitung (1) nach einem der Ansprüche 4 bis 11,
**dadurch gekennzeichnet, dass**
die Enden (23,24,25,26) der Heizelemente (2,3) miteinander oder mit Kaltleitern (8,9) elektrisch verbunden und/oder durch zumindest ein Füllelement verstärkt und miteinander oder mit Kaltleitern elektrisch verbunden sind, insbesondere gecrimpt sind.

13. Konfektionierte beheizbare Medienleitung nach einem der Ansprüche 4 bis 12,
**dadurch gekennzeichnet, dass**
die Enden (23,24,25,26) der Heizelemente (2,3) und/oder Verbindungs- oder Crimpstellen (4,5,6,7) in einer den Leitungsverbinder (17,18) zumindest teilweise umgebenden Kapselung (29,30) aufgenommen sind.

14. Konfektionierte Medienleitung nach einem der Ansprüche 4 bis 13,
**dadurch gekennzeichnet, dass**
die Heizelemente (2,3) unterschiedliche Widerstände (R2,R3) aufweisen.

## Claims

1. Method for producing a heatable media line (1), comprising a media line (10, 100), at least one line connector (17, 18) and at least two heating elements (2, 3), **characterised in that**
- the media line (10, 100) is prefabricated with the heating elements (2, 3) continuously wound around it, wherein the heating elements (2, 3) are fastened or fixed to the media line (10, 100) by at least one fastening means (16),
- the media line (10, 100) is cut, according to the specific application, to a first length (L_{R+H}), which corresponds to the desired media line length (I_{R}) plus an additional length (I_{z}), which carries the heating element length (I_{H}) required for winding around the at least one line connector (17, 18) and a transition region (19) between the media line (10, 100) and the line connector (17, 18),
- the fastening means (16) in the media line section (12, 13, 112, 113) corresponding to the additional length (I_{Z}) is removed,
- the heating element (2, 3) is unwound from the media line section (12, 13, 112, 113) corresponding to the additional length (I_{Z}),
- the media line (10, 100) is cut to the desired media line length (I_{R}) to form a second media line section (14, 114),
- before or after the media line is cut for the second time, one of the heating elements (2, 3) is shortened,
- the second media line section (14, 114) is connected to the at least one line connector (17, 18), and
- the heating element (2, 3) that has not been shortened is wound around the at least one line connector (17, 18), wherein, for heating the at least one line connector (17, 18), only one of the heating elements (2, 3) is arranged thereon such that it surrounds it at least partially.

2. Method according to claim 1,
**characterised in that**
after the two media line ends (12, 13) have been cut off, a sheathing tube (15) is pushed axially onto the second media line section (14, 114), wherein the sheathing tube (15) surrounds the media line section (14, 114) completely, and **in that** the two line connectors (17, 18) are housed in a respective enclosure (29, 30).

3. Method according to claim 1 or 2,
**characterised in that**
the heating elements (2, 3) are left open or are electrically connected or connected in parallel to one another and/or to cold conductors (8, 9) and/or to a bridging element and/or filling element.

4. Prefabricated heatable media line (1) having a media line (10, 100) having at least two heating elements (2, 3) arranged on the outside thereof and having at least one line connector (17, 18), wherein, for heating the at least one line connector (17, 18), only one of the at least two heating elements (2, 3), which are arranged along the media line (10, 100), is arranged at or on the line connector (17, 18) such that it surrounds it at least partially, and the heating element (3) that is provided for arrangement on the at least one line connector (17, 18) protrudes beyond the end face of the media line (10, 100) with a greater length (ΔI) than does the at least one further heating element (2).

5. Prefabricated heatable media line (1) according to claim 4,
**characterised in that**
the pitch (S₁, S₂) of the winding on the media line (10, 100) varies in sections, wherein the heating elements (2, 3) are wound around the media line (10, 100) with a smaller pitch in some sections than in the remaining winding region.

6. Prefabricated heatable media line (1) according to claim 5,
**characterised in that**
the pitch (S₁, S₂) of the winding on the media line is from 10 to 40 mm, in particular from 20 to 30 mm.

7. Prefabricated heatable media line (1) according to any one of claims 4 to 6, **characterised in that**
the heating power of the heating elements (2, 3) along the media line (10, 100) is from 20 to 8 W/m, in particular 14 W/m, and at the at least one line connector (17, 18) is from 1 to 4 W, in particular 1.5 W.

8. Prefabricated heatable media line (1) according to any one of claims 4 to 7, **characterised in that**
for improving the controllability of the heating power between the media line (10, 100) and the at least one line connector (17, 18), three heating elements, in particular heating strands, are provided.

9. Prefabricated heatable media line (1) according to any one of claims 4 to 8, **characterised in that**
the heating element (2, 3) is wound helically and/or in a meandering manner around the line connector (17, 18) or is arranged in an elongated manner around the line connector (17, 18).

10. Prefabricated heatable media line (1) according to any one of claims 4 to 9, **characterised in that**
the media line (10, 100) is in hose-like and/or tubular form, in particular in the form of polyamide tubing.

11. Prefabricated heatable media line (1) according to any one of claims 4 to 10, **characterised in that**
the heating elements (2, 3) are connected in series and/or in parallel by a bridging element, in particular the ends (23, 24, 25, 26) of the heating elements (2, 3) are electrically connected to one another by a bridging element and/or are reinforced by at least one filling element and electrically connected, in particular crimped, to one another by at least one bridging element.

12. Prefabricated heatable media line (1) according to any one of claims 4 to 11, **characterised in that**
the ends (23, 24, 25, 26) of the heating elements (2, 3) are electrically connected to one another or to cold conductors (8, 9) and/or are reinforced by at least one filling element and electrically connected, in particular crimped, to one another or to cold conductors.

13. Prefabricated heatable media line according to any one of claims 4 to 12, **characterised in that**
the ends (23, 24, 25, 26) of the heating elements (2, 3) and/or connection or crimp points (4, 5, 6, 7) are housed in an enclosure (29, 30) which surrounds the line connector (17, 18)at least partially.

14. Prefabricated media line according to any one of claims 4 to 13, **characterised in that**
the heating elements (2, 3) have different resistances (R2, R3).

## Revendications

1. Procédé de fabrication d'un ensemble de conduite de fluide chauffante (1), comprenant une conduite de fluide (10, 100), au moins un raccord de conduite (17, 18) et au moins deux éléments chauffants (2, 3),
**caractérisé en ce que**
- la conduite de fluide (10, 100) est pré-assemblée en continu enveloppée avec les éléments chauffants (2, 3), les éléments chauffants (2, 3) étant fixés sur la conduite de fluide (10, 100) par au moins un moyen de fixation (16),
- la conduite de fluide (10, 100) est coupée selon une première longueur (L*_{R+H}*) spécifique à l'application, qui correspond à la longueur de conduite de fluide souhaitée (L*_{R}*) majorée d'une longueur supplémentaire (L*_{z}*) correspondant à la longueur (L*ₕ*) de l'élément de chauffage nécessaire à son enroulement autour de l'au moins un raccord de conduite (17, 18) et à une zone de transition (19) entre la conduite de fluide (10, 100) et le raccord de conduite (17, 18),
- le moyen de fixation (16) dans la section de conduite de fluide (12, 13, 112, 113) correspondant à la longueur supplémentaire (L*_{z}*) est supprimé,
- l'élément chauffant (2, 3) est déroulé de la section de conduite de fluide (12, 13, 112, 113) correspondant à la longueur supplémentaire (L*_{z}*),
- la conduite de fluide (10, 100) est coupée à la longueur de conduite de fluide souhaitée (L*_{R}*) pour former une deuxième section de conduite de fluide (14, 114),
- avant ou après la deuxième coupe à longueur de la conduite de fluide, l'un des éléments chauffants (2, 3) est raccourci,
- la seconde section de conduite de fluide (14, 114) est connectée à l'au moins un raccord de conduite (17, 18), et
- l'au moins un raccord de conduite (17,18) est enveloppé avec l'élément chauffant non raccourci (2, 3).

2. Procédé selon la revendication 1,
**caractérisé en ce que**
après la séparation des extrémités (12, 13) de la conduite de fluide, un tube de gainage (15) est glissé axialement sur la deuxième section de conduite de fluide (14, 114), le tube de gainage (15) entourant complètement la section de conduite de fluide (14,114), et **en ce que** les deux raccords de conduite (17, 18) sont logés dans des capsules respectives (29, 30).

3. Procédé selon la revendication 1 ou 2,
**caractérisé en ce que**
les éléments chauffants (2, 3) sont laissés ouverts ou électriquement connectés entre eux et/ou avec des thermistances CTP (8, 9) et/ou avec un élément en pont et/ou avec un élément de remplissage, ou bien connectés en parallèle.

4. Ensemble de conduite de fluide chauffante(l), comprenant une conduite de fluide (10,100) avec au moins deux éléments chauffants (2, 3) disposés à l'extérieur de celle-ci et au moins un raccord de conduite (17, 18), dans lequel
pour chauffer l'au moins un raccord de conduite (17, 18), un seul des au moins deux éléments chauffants (2, 3)disposés le long de la conduite de fluide (10, 100) entoure au moins partiellement le raccord de conduite (17, 18), et l'élément chauffant (3) qui est disposé sur l'au moins un raccord de conduite (17, 18) présente une plus grande longueur (ΔL) dépassant de la face d'extrémité de conduite de fluide (10, 100) que l'au moins un autre élément chauffant (2).

5. Ensemble de conduite de fluide chauffante (1) selon la revendication 4, **caractérisé en ce que** le pas (S1, S2) de l'enroulement sur la conduite de fluide (10, 100) varie par sections, les éléments chauffants (2, 3) étant enroulés autour de la conduite de fluide (10, 100) avec un pasplus faible dans certaines sections que dans d'autres sections.

6. Ensemble de conduite de fluide chauffante (1) selon la revendication 5,
**caractérisé en ce que**
le pas (S1, S2) de l'enroulement sur la conduite de fluide est de 10 à 40 mm, en particulier de 20 à 30 mm.

7. Ensemble de conduite de fluide chauffante (1) selon l'une des revendications 4 à 6, **caractérisé en ce que**
la puissance de chauffe des éléments chauffants (2, 3) le long de la conduite de fluide (10, 100) est de 20 à 8 W/m, notamment de 14 W/m, et sur l'au moins un raccord de conduite de ligne (17, 18) est de 1 à 4 W, en particulier 1,5 W.

8. Ensemble de conduite de fluide chauffante (1) selon l'une des revendications 4 à 7, **caractérisé en ce que**
pour améliorer la capacité d'influencer la puissance de chauffage entre la conduite de fluide (10, 100) et l'au moins un raccord de conduite (17, 18), trois éléments chauffants, en particulier des brins chauffants, sont prévus.

9. Ensemble de conduite de fluide chauffante (1) selon l'une des revendications 4 à 8, **caractérisé en ce que**
l'élément chauffant (2, 3) s'enroule et/ou serpente autour duraccord de conduite (17, 18) ou est allongé autour du raccord de conduite (17, 18).

10. Ensemble de conduite de fluide chauffante (1) selon l'une des revendications 4 à 9, **caractérisé en ce que**
la conduite de fluide (10, 100) est en forme de tuyau et/ou tubulaire, en particulier sous forme de conduite en polyamide.

11. Ensemble de conduite de fluide chauffante (1) selon l'une des revendications 4 à 10, **caractérisé en ce que**
les éléments chauffants (2, 3) sont connectés en série par un élément de pont et/ou sont connectés en parallèle, en particulier les extrémités (23, 24, 25, 26) des éléments chauffants (2, 3) sont reliées électriquement par au moins un élément de pontet/ou sont renforcées par au moins un élément de remplissage et reliées électriquemententre ellespar au moins un élément de pont, en particulier par sertissage.

12. Ensemble de conduite de fluide chauffante (1) selon l'une des revendications 4 à 11, **caractérisé en ce que**
les extrémités (23,24,25,26) des éléments chauffants (2,3) sont reliées électriquement entre elles ou àdes thermistances CTP (8, 9) et/ou renforcées par au moins un élément de remplissage et reliées électriquement entre elles ou à des thermistances CTP, en particulier par sertissage.

13. Ensemble de conduite de fluide chauffante selon l'une des revendications 4 à 12, **caractérisé en ce que**
les extrémités (23,24,25,26) des éléments chauffants (2,3) et/ou des points de raccordement ou de sertissage (4,5,6,7) sont inclus dans une encapsulation (29,30) entourant au moins partiellement le raccord de conduite (17,18).

14. Ensemble de conduite de fluide chauffante selon l'une des revendications 4 à 13, **caractérisé en ce que**
les éléments chauffants (2, 3) ont des résistances différentes (R2, R3).
